## Europäisches Patentamt

## European Patent Office

## Office européen des brevets

(19)

(11) Veröffentlichungsnummer: **0 109 516**
**B1**

(12) **EUROPÄISCHE PATENTSCHRIFT**

(45) Veröffentlichungstag der Patentschrift:
27.01.88

(51) Int. Cl.⁴: **H 01 G 4/32,** H 01 G 13/00

(21) Anmeldenummer: **83109702.7**

(22) Anmeldetag: **28.09.83**

(54) **Elektrischer Wickelkondensator, sowie Verfahren und Vorrichtung zu seiner Herstellung.**

(30) Priorität: **27.10.82 DE 3239865**

(43) Veröffentlichungstag der Anmeldung:
**30.05.84 Patentblatt 84/22**

(45) Bekanntmachung des Hinweises auf die Patenterteilung:
**27.01.88 Patentblatt 88/4**

(84) Benannte Vertragsstaaten:
**DE FR GB IT**

(56) Entgegenhaltungen:
**CH - A - 218 588**
**DE - A - 1 514 063**
**DE - C - 587 964**
**DE - C - 969 413**
**FR - A - 2 366 773**
**GB - A - 737 853**

(73) Patentinhaber: **Siemens Aktiengesellschaft Berlin und München, Wittelsbacherplatz 2, D-8000 München 2 (DE)**

(72) Erfinder: **Krös, Rudolf, Dipl.-Ing., Walkürenweg 24, D-7920 Heidenheim (DE)**
Erfinder: **Vetter, Harald, Dipl.-Ing., Weinberg 7, D-8400 Regensburg (DE)**

ACTORUM AG

## Beschreibung

Die Erfindung betrifft einen elektrischen Wickelkondensator, insbesondere Leistungskondensator, der in ein Gehäuse eingebaut und mit Stirnkontaktschichten versehen ist und bei dem der Kondensatorwickel mit einer Bandage verfestigt ist, sowie ein Verfahren und eine Vorrichtung zu seiner Herstellung.

Derartige Kondensatoren sind bekannt, wobei die Ausstattung mit einer hochfesten Bandage ein Aufplatzen der Kondensatorgehäuse verhindern soll. Die Bandage muss dabei in der Lage sein, bei defekten Kondensatoren den Energieeinhalt des Wickels soweit in mechanische Verformungsarbeit umzuwandeln, dass die Kondensatorengehäuse nur noch in zulässigen Grenzen verformt werden können. Bei imprägnierten Kondensatoren darf gleichzeitig die materialabhängige Ölbeeinflussung schädliche Werte nicht überschreiten.

Als Bandagen wurden bisher bei grossen Kondensatorenwickeln Endleerwindungen aus Papier und/oder Kunststoffolien in unterschiedlicher Lagenzahl angeordnet. Allen derartigen Bandagen ist gemeinsam, dass sie als gewickelte Folie im Aussenbereich des Wickels ausgeführt werden, ohne gleichzeitig eine stirnseitige Isolierung und Verfestigung des Wickels herzustellen. Bei Verwendung mehrerer Wickel in einem Kondensatorgehäuse muss somit gewährleistet werden, dass kein Kurzschluss zwischen verschiedenen Kondensatorwickeln über die Stirnkontaktseiten entstehen kann.

Aufgabe der Erfindung ist es, die Bandage für einen Kondensator der eingangs genannten Art derart auszugestalten, dass bei einer kostengünstigen Herstellung eine Verfestigung des Wickels auch an den Stirnseiten erfolgt, wobei die stirnseitige Isolierung und die mechanische Zentrierung der Wickel sowohl radial als auch axial gewährleistet ist (Stapelbarkeit), sowie ein Verfahren zur Herstellung eines derartigen Kondensators und eine Vorrichtung zur Durchführung des Verfahrens anzugeben.

Diese Aufgabe wird bei dem eingangs genannten Kondensator erfindungsgemäss dadurch gelöst, dass die Bandage aus einem glasfaserverstärkten Kunstharzverbund besteht. Vorzugsweise bedeckt die Bandage sowohl die Wickelaussenseite als auch Teile der Stirnkontaktschichten.

Eine Weiterbildung der Erfindung sieht vor, dass der glasfaserverstärkte Kunstharzverbund im Bereich der Stirnseiten des Kondensatorwickels mit einer Verzahnung versehen ist.

Das erfindungsgemässe Verfahren zum Herstellen des elektrischen Wickelkondensators besteht darin, dass ein Glasfaserfaden nach Durchlaufen eines Harzträbkbades spulenförmig um den Kondensatorwickel gewickelt wird und dass der glasfaserverstärkte Kunstharzverband anschliessend ausgehärtet wird.

Gemäss einer Weiterbildung des erfindungsgemässen Verfahrens wird der Kunstharzverband vor der Aushärtung in einem Gefäss unter vermindertem Druck entgast.

Die erfindungsgemässe Vorrichtung zur Durchführung des Verfahrens besteht aus zwei Formhälften, die in das Kernrohr des Kondensatorwickels eingesteckt und durch eine Spannvorrichtung zusammengehalten werden, wobei die Formhälften unterschiedliche Formgebung in der Art aufweisen, dass eine Verzahnung des Kunstharzverbundes auf einem gemeinsamen Teilkreis entsteht und wobei die beiden Formhälften durch ein Dichtelement radial gegen die freibleibenden Teile der Stirnkontaktschichten abgedichtet sind.

Die Vorteile des Gegenstandes der Erfindung werden anhand der folgenden Ausführungsbeispiele erläutert. In der dazugehörenden Zeichnung zeigen

Fig. 1 ein Schnittbild eines Kondensators mit angesetzter Vorrichtung,

Fig. 2 und Fig. 3 jeweils ein Schnittbild der Vorrichtung.

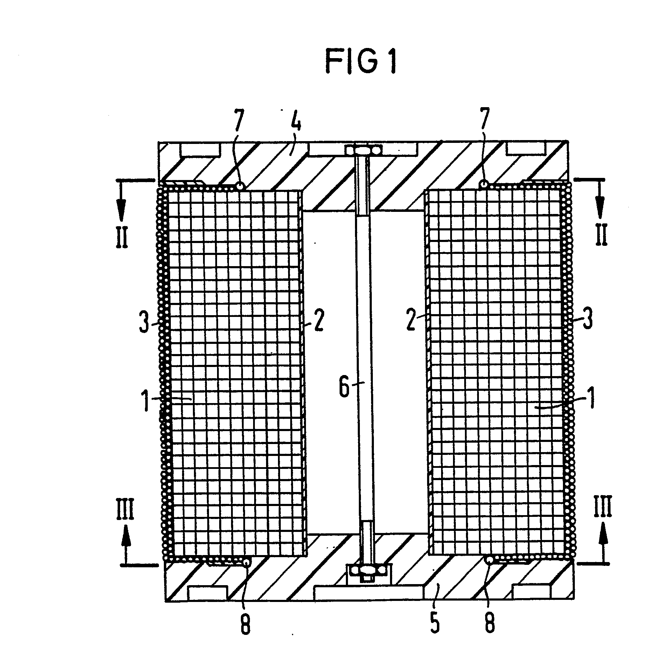

In der Fig. 1 ist ein Kondensatorwickel 1 dargestellt, der auf ein Kernrohr 2 aufgewickelt ist. Der Kondensatorwickel 1 ist an seiner Aussenseite mit einer Bandage versehen, die aus einem Glasfaserfaden 3 besteht, der spulenförmig um den Wickel gewickelt ist und vor dem Aufwickeln ein Harzträbkbad, beispielsweise mit einem Epoxidharz, durchlaufen hat. Die Bandage mit dem Kunstharzgetränkten Glasfaserfaden 3 befindet sich nicht nur auf der Aussenseite sondern auch teilweise an den Stirnseiten des Kondensatorwickels 1.

Zur Herstellung der Glasfaserbandage dienen die beiden Hälften 4 und 5 einer Vorrichtung, die in das Kernrohr 2 des Kondensatorwickels 1 eingeführt und mittels einer Spannvorrichtung 6, beispielsweise einer Durchsteckschraube, miteinander verbunden sind. Zur Abdichtung für die Teile der Stirnkontaktschichten, die nicht mit der Bandage versehen werden sollen, dienen zwei Dichtelemente 7 und 8, z.B. O-Ringe oder andere funktionsgleiche Dichtelemente wie beispielsweise Teflon-Ringe. Die Vorrichtung 4 bzw. 5 besteht vorzugsweise aus einem Material mit Selbsttrenneffekt wie beispielsweise Polytetrafluorethylen oder einer mit einem Silikon-Trennmittel beschichteten Metallform. Die beiden Hälften 4 und 5 der Vorrichtung sind dabei derart ausgestaltet, dass eine Verzahnung auf einem gemeinsamen Teilkreis für den Kondensatorwickel 1 in der Art entsteht, dass erhaben ausgebildeten Teilen der glasfaserverstärkten Kunststoffbandage auf der einen Seite Vertiefungen auf der anderen Stirnseite des Kondensatorwickels 1 entsprechen. Dadurch wird die gegenseitige Arretierung und Zentrierung der Wickel gewährleistet.

Die Glasfaserbandage 3 enthält ihre Wandstärke am Umfang des Kondensatorwickels 1 durch die vorgegebene Lagenanzahl, Fadendicke, Tränkgrad und Wickelzug, während an den Stirnseiten die Wandstärke durch die Geometrie der Vorrichtung 4 bzw. 5 bestimmt wird. Durch den Wickelzug beim Wickeln zwischen den beiden Formhälften 4 und 5 und den Stirnseiten des Kondensatorwickels 1 erfolgt nämlich nicht nur eine Kraft in radialer, sondern auch in axialer Richtung, so dass die entsprechende Ausformung der Verzahnung, ggf. auch durch Herausdrücken des mitgeführten Kunstharzes aus den Glasfaserfäden 3, gewährleistet wird.

Anschliessend an die Herstellung der Glasfaserbandage 3 kann eine Evakuierung erfolgen, um absolute Blasenfreiheit zu gewährleisten. Es ist aber auch möglich, einen Abstreifschlitten für die getränkten Fasern nach der Tränkwanne zu verwenden, wobei ebenfalls fast blasenfreie Laminate ohne Vakuum erzeugt werden können. An diese Arbeitsgänge schliesst sich ggf. eine Aushärtung des glasfaserverstärkten Kunstharzverbundes an.

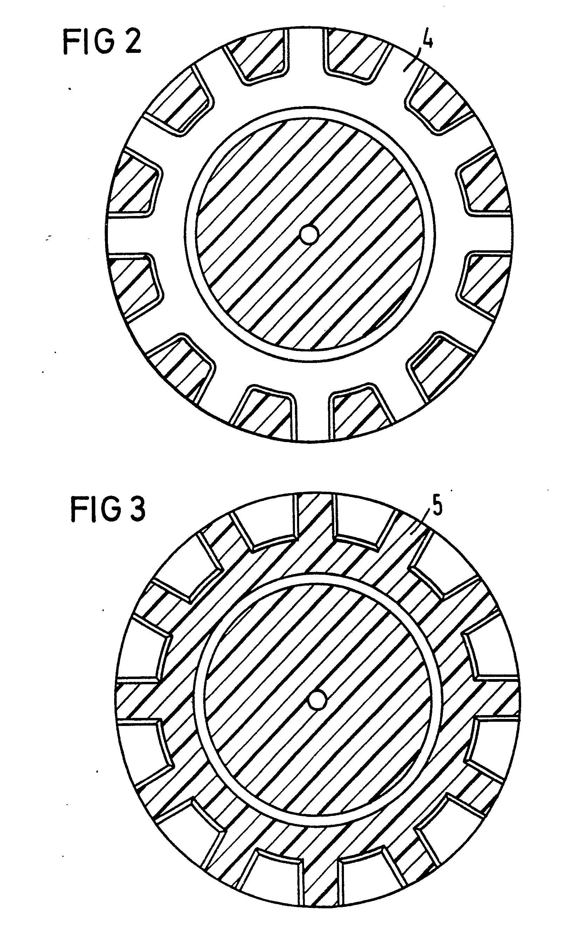

In den Fig. 2 und 3 ist ein Schnittbild der beiden Hälften 4 bzw. 5 der Vorrichtung dargestellt, wobei die Schnittebenen in der Fig. 1 angegeben sind. Wie dem Schnittbild zu entnehmen ist, weisen die beiden Formhälften 4 bzw. 5 eine Formgebung in der Art auf, dass erhabenen Stellen des einen Formsatzes Vertiefungen beim andern Formsatz entsprechen. Durch diese Massnahme wird gewährleistet, dass beim gemeinsamen Einbau mehrerer Kondensatorwickel in ein Gehäuse eine Verzahnung entsteht, die die gegenseitige Zentrierung und Arretierung der Wickel ermöglicht.

Der erfindungsgemässe Kondensator zeichnet sich demnach besonders dadurch aus, dass er keine kostengünstige Bandage aufweist, die nicht nur am Umfang, sondern auch an den Stirnseiten des Kondensatorwickels eine Isolation gewährleistet sowie die Stapelbarkeit der Kondensatorwickel ermöglicht.

Weiterhin zeichnet sich die Glasfaserbandage durch eine überlegene Festigkeit gegenüber den bisher verwendeten Bandagen durch Endleerwindungen. Betrachtet man nämlich die Volumenänderungsarbeit der Bandage in einem kleinen Volumenelement (näherungsweise einachsiger Spannungszustand angenommen), so gilt:

$$W_v \approx \frac{11}{2} E \cdot R \cdot \varepsilon^2 \cdot b \cdot s \qquad (1)$$

wobei E den E-Modul ($N/mm^2$), R den Wickelradius (mm), $\varepsilon$ die Dehnung (mm/mm), b die Breite (mm), s die Dicke (mm) und $\varepsilon_b$ die Bruchdehnung (mm/mm) bedeuten. Es existiert somit eine Kenngrösse für die Materialwahl:

$$K \approx E \cdot \varepsilon_m^2,$$

die in der folgenden Tabelle für Glas, Polypropylen und Papier angegeben ist.

| Material | $E \cdot \varepsilon_m^2 / \dfrac{N}{mm2 \cdot 1}$ |
|---|---|
| Glas | 98 |
| Polypropylen | 3,2 |
| Papier | 2,25 |

Aus der Tabelle ist zu entnehmen, dass die erfindungsgemässe Glasfaserbandage in besonders guter Weise die Festigkeitsforderung des Kondensatorwickels gewährleistet.

**Patentansprüche**

1. Elektrischer Wickelkondensator, insbesondere Leistungskondensator, der in ein Gehäuse eingebaut und mit Stirnkontaktschichten versehen ist und bei dem der Kondensatorwickel mit einer Bandage verfestigt ist, dadurch gekennzeichnet, dass die Bandage aus einem glasfaserverstärkten Kunstharzverbund besteht.

2. Elektrischer Wickelkondensator nach Anspruch 1, dadurch gekennzeichnet, dass die Bandage sowohl den Wickelumfang als auch Teile der Stirnkontaktschichten bedeckt.

3. Elektrischer Wickelkondensator nach Anspruch 1 oder 2, dadurch gekennzeichnet, dass der glasfaserverstärkte Kunstharzverbund im Bereich der Stirnseiten des Kondensatorwickels mit einer Verzahnung versehen ist.

4. Verfahren zum Herstellen des elektrischen Wickelkondensators nach den Ansprüchen 1 bis 3, dadurch gekennzeichnet, dass ein Glasfaserfaden nach Durchlaufen eines Harztränkbades spulenförmig um den Kondensatorwickel gewickelt wird und dass der glasfaserverstärkte Kunstharzverband anschliessend ausgehärtet wird.

5. Verfahren nach Anspruch 4, dadurch gekennzeichnet, dass der Kunstharzverband vor der Aushärtung in einem Gefäss unter vermindertem Druck entgast wird.

6. Vorrichtung zur Durchführung des Verfahrens nach Anspruch 4, dadurch gekennzeichnet, dass sie aus zwei Formhälften (4, 5) besteht, die in das Kernrohr (2) des Kondensatorwickels (1) eingesteckt und durch eine Spannvorrichtung (6) zusammengehalten werden, dass die Formhälften (4, 5) unterschiedliche Formgebung in der Art aufweisen, dass eine Verzahnung des Kunstharzverbundes auf einen gemeinsamen Teilkreis entsteht, und dass die beiden Formhälften (4, 5) durch ein Dichtelement (7, 8) radial gegen die freibleibenden Teile der Stirnkontaktschichten abgedichtet sind.

**Claims**

1. A wound electrical capacitor, in particular a power capacitor, which is installed in a housing and is provided with end contact layers, and in which the capacitor winding is secured by means of a wrapping, characterised in that the wrapping consists of a glass fibre-reinforced synthetic resin combination.

2. A wound electrical capacitor as claimed in Claim 1, characterised in that the wrapping covers both the periphery of the winding and parts of the end contact layers.

3. A wound electrical capacitor as claimed in Claim 1 or 2, characterised in that the glass fibre-reinforced synthetic resin combination is provided with indentation in the region of the end faces of the capacitor winding.

4. A process for the production of the wound electrical capacitor claimed in Claims 1 to 3, characterised in that after having passed through a resin impregnating bath, a glass fibre thread is wound in helical fashion around the capacitor winding; and that the glass fibre-reinforced synthetic resin wrapping is subsequently hardened.

5. A process as claimed in Claim 4, characterised in that, prior to hardening, the synthetic resin wrapping is degassed in a vessel at reduced pressure.

6. Apparatus for carrying out the process claimed in Claim 4, characterised in that it consists of two mould halves (4, 5) which are inserted into the inner core (2) of the capacitor winding (1) and are held together by a clamping device (6); that the mould halves (4, 5) are provided with different shaping in such manner that indentation of the synthetic resin combination occurs on a common part circle; and that the two mould halves (4, 5) are radially sealed by a sealing element (7, 8) from those parts of the end contact layers which remain uncovered.

## Revendications

1. Condensateur électrique bobiné, en particulier condensateur de puissance monté dans un boîtier et pourvu de couches frontales de contact, et dans lequel la bobine est consolidée à l'aide d'un enrobage, caractérisé par le fait que l'enrobage est constitué par un matériau composite à base de résine synthétique, renforcé par des fibres de verre.

2. Condensateur électrique bobiné selon la revendication 1, caractérisé par le fait que l'enrobage recouvre aussi bien la périphérie de la bobine que des parties des couches frontales de contact.

3. Condensateur électrique bobiné selon la revendication 1 ou 2, caractérisé par le fait que le matériau composite à base de résine synthétique et renforcé à l'aide de fibres de verre, est pourvu, dans la zone des côtés frontaux de la bobine de condensateur, d'une denture.

4. Procédé pour la fabrication d'un condensateur électrique bobiné, selon les revendications 1 à 3, caractérisé par le fait qu'un fil de fibres de verre, après passage d'un bain de trempage d'une résine, est enroulé, en forme de bobine sur la bobine du condensateur, et que l'enrubannage à base de résine synthétique et renforcé par des fibres de verre, est ensuite durci.

5. Procédé selon la revendication 4, caractérisé par le fait que l'enrubannage à base de matière synthétique est dégazé, avant durcissement, dans le boîtier et sous une pression diminuée.

6. Dispositif pour la mise en œuvre du procédé selon la revendication 4, caractérisé par le fait qu'il est constitué par deux moités de moule (4, 5) qui sont enfichées dans le tube-noyau (2) de la bobine de condensateur (1) et sont maintenues dans leur état assemblé à l'aide d'un dispositif de serrage (6), que les moitiés de moule (4, 5) présentent des conformations différentes et cela de telle façon qu'une denture du matériau composite à base de résine synthétique se forme sur un cercle partiel commun, et que les deux moitiés de moule (4, 5) sont rendues étanches, radialement et par un moyen d'étanchéité (7, 8), par rapport aux parties des couches frontales de contact qui restent dégagées.

# FIG 1

FIG 2

4

FIG 3

5